Europäisches Patentamt

European Patent Office

Office européen des brevets

(19)

(11) Veröffentlichungsnummer: **0 177 822**
B1

(12) # EUROPÄISCHE PATENTSCHRIFT

(45) Veröffentlichungstag der Patentschrift:
**13.12.89**

(51) Int. Cl.⁴: **B23K 9/08**

(21) Anmeldenummer: **85112019.6**

(22) Anmeldetag: **23.09.85**

(54) Schweisseinrichtung für das Schmelzschweissen mit magnetisch bewegtem Lichtbogen.

(30) Priorität: **28.09.84 DE 3435837**

(43) Veröffentlichungstag der Anmeldung:
**16.04.86 Patentblatt 86/16**

(45) Bekanntmachung des Hinweises auf die Patenterteilung:
**13.12.89 Patentblatt 89/50**

(84) Benannte Vertragsstaaten:
**AT BE CH DE FR GB IT LI NL SE**

(56) Entgegenhaltungen:
**DD-A- 106 574**

(73) Patentinhaber: **Siemens Aktiengesellschaft,
Wittelsbacherplatz 2, D-8000 München 2(DE)**

(72) Erfinder: **Karl, Franz, Ing.-grad., Haidfeldstrasse 16,
D-8156 Otterfing(DE)**
Erfinder: **Klauke, Günter, Dipl.-Ing., Frühholzstrasse 12,
D-8000 München 71(DE)**
Erfinder: **Hoene, Ernst-Ludwig, Dr., Fürstendamm 1,
D-1000 Berlin 28(DE)**

## Beschreibung

Die Erfindung betrifft eine Schweißeinrichtung zum Herstellen von Bördel- oder Stirnflachnahtverbindungen durch Schmelzschweißen mit magnetisch bewegtem Lichtbogen, wobei der Lichtbogen zwischen einer in sich geschlossenen Schweißkontur des Werkstücks und einer dieser Schweißkontur angepaßten, nicht abschmelzenden Hilfselektrode bewegbar ist.

Eine derartige Schweißeinrichtung ist beispielsweise aus der Fachinformation von KUKA, Augsburg, 10. 1981. Nr. 40 "Schweißen mit magnetisch bewegtem Lichtbogen und seine industrielle Anwendung" Sonderdruck aus DVS-Bericht, Bd. 70, bekannt. Bei dem Schmelzschweißen mit einem sich zwischen dem Werkstück und einer nicht abschmelzenden Hilfselektrode bewegenden Lichtbogen wird der Lichtbogen durch eine Annäherung der Hilfselektrode an das Werkstück oder durch einen Hochfrequenz-Impuls gezündet und durch ein mit Hilfe von Magnetspulen aufgebautes Magnetfeld in Rotation versetzt, wobei die Stirnflächen der zu verbindenden Teile miteinander verschmelzen. Eine Voraussetzung für die Anwendung des Schmelzschweißens mit magnetisch bewegtem Lichtbogen ist dabei, daß die Werkstücke eine in sich geschlossene Schweißkontur aufweisen und daß die Form der Hilfselektrode dieser Schweißkontur angepaßt ist. Der Lichtbogen kann dann entlang dieser geschlossenen Schweißkontur umlaufen, wobei die Umlaufgeschwindigkeit beispielsweise 300 bis 500 Umläufe pro Sekunde betragen kann. Zur Erzielung einer hohen Nahtqualität muß der Lichtbogen mit gleichmäßiger Geschwindigkeit umlaufen, da bei schwankenden Umlaufgeschwindigkeiten auch die Einbrandtiefe starken Schwankungen unterliegt und eine entsprechend ungleichmäßige Schweißnaht entsteht. Bei der industriellen Anwendung des Schmelzschweißens mit magnetisch bewegtem Lichtbogen kann diese Forderung nach einer gleichmäßigen Umlaufgeschwindigkeit des Lichtbogens jedoch häufig nicht erfüllt werden, wobei die Ursachen einer schwankenden Umlaufgeschwindigkeit weitgehend unbekannt sind. Obwohl das Verhältnis zwischen Magnetisierungsfeldstärke und Schweißstromstärke einen erheblichen Einfluß auf die Stabilität der Rotation des Lichtbogens hat, kann auch durch eine Optimierung dieses Verhältnisses keine gleichmäßige Umlaufgeschwindigkeit gewährleistet werden.

Außerdem ist aus Dokument DD-A 106 574 eine Formelektrode für das Schweißen mit magnetisch bewegten Lichtbogen bekannt, die auf der den Werkstücken zugewandten Stirnseite zwei Brennfasen 1 und 2 trägt. Die Brennfasen sind dabei durch eine V-förmige, ringförmig umlaufende Nut voneinander getrennt, wobei der Abstand der Brennfasen 1 und 2 die Ausbildung von zwei Lichtbögen ermöglicht.

Der Erfindung liegt die Aufgabe zugrunde, eine Schweißeinrichtung für das Schmelzschweißen mit magnetisch bewegtem Lichtbogen zu schaffen, bei welcher ein zumindest weitgehend gleichmäßiger und stabiler Lichtbogenumlauf und damit eine hohe Nahtqualität gewährleistet ist.

Diese Aufgabe wird bei einer gattungsgemäßen Schweißeinrichtung dadurch gelöst, daß in den der Schweißkontur des Werkstücks naheliegenden Mantelbereich der Hilfselektrode Schlitze eingebracht sind. Die erfindungsgemäß mit Schlitzen versehene Hilfselektrode führt zu einem gleichmäßigen und stabilen Umlauf des Lichtbogens, d.h. ein lokaler Einbrand durch den umlaufenden Lichtbogen wird vermieden. Auf welchen Tatsachen dieser Effekt beruht, konnte bislang noch nicht mit Sicherheit geklärt werden.

Gemäß einer bevorzugten Ausgestaltung der Erfindung sind die Schlitze gerade. Derartige gerade Schlitze können auf besonders einfache Weise, beispielsweise durch Fräsen, in die Hilfselektrode eingebracht werden.

Weiterhin hat es sich als günstig herausgestellt, wenn die Schlitze zur Längsachse der Hilfselektrode geneigt sind. Vorzugsweise wird die erfindungsgemäße Hilfselektrode so ausgebildet, daß die Schlitze zur Schweißkontur hin geschlossen sind. Bei einer derartigen Schlitzform kann eine hohe Lebensdauer der Hilfselektrode erreicht werden.

Die Schlitze können aber auch zur Schweißkontur hin offen sein. Bei dieser Ausführungsform ist jedoch darauf zu achten, daß keine zu scharfen Spitzen gebildet werden, die durch den umlaufenden Lichtbogen aufgeschmolzen werden könnten.

Gemäß einer anderen bevorzugten Ausgestaltung der Erfindung sind die Schlitze zumindest annähernd gleichmäßig über den Umfang der Hilfselektrode verteilt. So konnten bei einer kreisförmigen Schweißkontur durch eine absolut gleichmäßige Umfangsteilung der Schlitze besonders hohe Nahtqualitäten erzielt werden. Bei Schweißkonturen mit scharfen Ecken könnte es jedoch ggf. zweckmäßig sein, im Eckbereich von der gleichmäßigen Umfangsteilung etwas abzuweichen.

Ein besonders gutes Zündverhalten und eine besonders hohe Stabilität des Lichtbogens können erzielt werden, wenn die Hilfselektrode aus einer Wolfram-Thorium-Legierung besteht. Dieser Effekt ist auch schon dann gewährleistet, wenn der Thorium-Anteil weniger als 5% beträgt.

Im folgenden werden Ausführungsbeispiele der Erfindung anhand der Zeichnung näher erläutert. Es zeigen:

Figur 1 eine Schweißeinrichtung für das Schmelzschweißen mit magnetisch bewegtem Lichtbogen in stark vereinfachter schematischer Darstellung,

Figur 2 die bei der Schweißeinrichtung nach Figur 1 eingesetzte Hilfselektrode,

Figur 3 eine zweite Ausführungsform einer Hilfselektrode,

Figur 4 einen Schnitt durch eine mit der Schweißeinrichtung nach Figur 1 hergestellte Schweißverbindung und

Figur 5 verschiedene Beispiele für eine in sich geschlossene Schweißkontur.

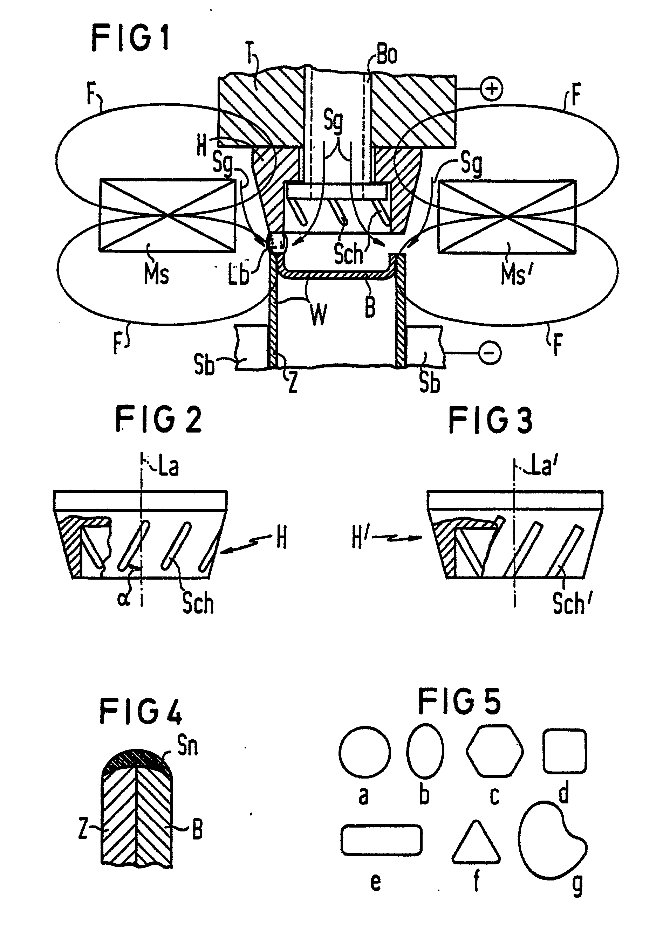

Gemäß Figur 1 wird ein Werkstück W zwischen die Spannbacken Sb einer Schweißaufnahme eingespannt und dabei als Kathode einer nicht näher dargestellten Schweißstromquelle kontaktiert. Das Werkstück W besteht dabei aus einem Zylinder Z, in welchen oben ein randseitig umgebördelter Boden B eingesetzt ist, wobei beide Teile durch eine Bördelnaht miteinander verbunden werden sollen. Der Außendurchmesser des Zylinders Z beträgt dabei beispielsweise 50 mm, während die Wandstärken des Zylinders Z und des Bodens B beispielsweise 0,5 mm betragen.

Oberhalb des Werkstücks W befindet sich eine ringförmige Hilfselektrode H, welche beispielsweise aus sauerstofffreiem Elektrolytkupfer, aus einer Wolfram-Kupfer-Legierung mit 80% Wolfram und 20% Kupfer oder einer Wolfram-Thorium-Legierung mit 98% und 2% Thorium bestehen kann. In letzterem Fall zeichnet sich die Hilfselektrode H durch eine besondere Zündfreudigkeit aus. Die untere Stirnfläche der Hilfselektrode H ist dem Werkstück W in einem Abstand von beispielsweise 2 mm zugewandt und in ihren Abmessungen der kreisringförmigen Schweißkontur des Werkstücks W angepaßt. Die Befestigung der Hilfselektrode H erfolgt mit Hilfe eines Bolzens Bo, welcher in einem Träger T befestigt ist. Der beispielsweise aus Messing bestehende Träger T hat zusätzlich auch noch die Aufgabe, die Hilfselektrode H als Anode zu kontaktieren. Auf einander gegenüberliegenden Seiten der Hilfselektrode H befinden sich außerdem noch zwei nur schematisch dargestellte Magnetspulen Ms und Ms', welche ein stationäres Magnetfeld erzeugen, dessen mit F bezeichnete Feldlinien zur Schweißstelle möglichst senkrecht verlaufen sollen. Während des Schweißvorganges wird die Schweißstelle mit Schutzgas beaufschlagt, was in Figur 1 durch Pfeile Sg angedeutet ist. Als Schutzgas Sg kann beispielsweise $CO_2$ oder ein Inertgasgemisch verwendet werden. Der Spulentreiberstrom der Magnetspulen Ms und Ms' beträgt beispielsweise 10 bis 15 A, während die Kurzschlußspannung der Schweißstromquelle ca. 80 bis 100 V und die Schweißspannung ca. 30 V beträgt. Sobald zwischen der Hilfselektrode H und dem Werkstück W ein Lichtbogen Lb gezündet ist, beträgt der Schweißstrom ca. 220 A. Das Zünden des Lichtbogens Lb wird dabei entweder durch Absenken der Hilfselektrode H auf das Werkstück W und anschließendes Anheben oder durch einen Hochfrequenz-Impuls herbeigeführt. Sobald der Lichtbogen Lb dann gezündet ist, wird er durch das aufgebaute Magnetfeld in Rotation versetzt und läuft auf der Schweißkontur um, wobei die Umlaufgeschwindigkeit beispielsweise 300 bis 500 Umläufe pro Sekunde beträgt.

Um nun beim Schweißen einen gleichmäßigen und stabilen Umlauf des Lichtbogens Lb zu erreichen, sind in den der Schweißkontur des Werkstücks W naheliegenden Mantelbereich der Hilfselektrode H Schlitze Sch eingebracht, was insbesondere in Figur 2 zu erkennen ist. Der dem Träger T naheliegende Umfangsbereich der Hilfselektrode H ist dabei ungeschlitzt, da dies nicht erforderlich ist und da außerdem die Festigkeit nicht zu stark beeinträchtigt werden soll. Die Schlitze Sch, die beispielsweise eine Schlitzbreite von 1 mm aufweisen, sind zur Schweißkontur des Werkstücks W hin geschlossen und zur Längsachse La der Hilfselektrode H hin um einen Winkel $\alpha$ geneigt, wobei der Winkel $\alpha$ beispielsweise 35° beträgt. Außerdem sind die Schlitze Sch gleichmäßig über den Umfang der Hilfselektrode H verteilt.

Figur 3 zeigt eine Variante, bei welcher in die mit H' bezeichnete ringförmige Hilfselektrode mit gleichmäßiger Teilung über den Umfang verteilte Schlitze Sch' eingebracht sind, die zur Schweißkontur hin offen sind. Im übrigen sind die Schlitze Sch' ebenfalls zur Längsachse La' der Hilfselektrode H' hin geneigt.

Figur 4 zeigt einen Schnitt durch die Schweißstelle der mit der Schweißeinrichtung nach Figur 1 hergestellten Stirnflachnahtverbindung. Der Zylinder Z und der Boden B wurden durch den umlaufenden Lichtbogen Lb (vgl. Figur 1) im Stirnflächenbereich miteinander verschmolzen, wobei die Schweißnaht Sn einen sichelförmigen Querschnitt aufweist. Durch die Verwendung der geschlitzten Hilfselektrode H bzw. H' konnte eine Stirnflachnahtverbindung erzielt werden, bei welcher kein lokaler Einbrand zu verzeichnen war.

Figur 5 gibt eine Übersicht über verschiedene in sich geschlossene Schweißkonturen a bis g, welche mit der erfindungsgemäßen Schweißeinrichtung verschweißbare Werkstücke beispielsweise aufweisen können. Dabei zeigt insbesondere die Schweißkontur g, daß auch in sich geschlossene Schweißkonturen mit beliebiger Form geeignet sind. Die Form der geschlitzten Hilfselektrode ist dabei jeweils der vorhandenen Schweißkontur anzupassen.

**Patentansprüche**

1. Schweißeinrichtung zum Herstellen von Bördel- oder Stirnflachnahtverbindungen durch Schmelzschweißen mit magnetisch bewegtem Lichtbogen, wobei der Lichtbogen zwischen einer in sich geschlossenen Schweißkontur des Werkstücks und einer dieser Schweißkontur angepaßten, nicht abschmelzenden Hilfselektrode bewegbar ist, dadurch **gekennzeichnet** daß in den der Schweißkontur (a; b; c; d; e; f; g) des Werkstücks (W) naheliegenden Mantelbereich der Hilfselektrode (H; H') Schlitze (Sch; Sch') eingebracht sind.

2. Schweißeinrichtung nach Anspruch 1, dadurch **gekennzeichnet,** daß die Schlitze (Sch; Sch') gerade sind.

3. Schweißeinrichtung nach Anspruch 2, dadurch **gekennzeichnet,** daß die Schlitze (Sch; Sch') zur Längsachse (La; La') der Hilfselektrode (H; H') geneigt sind.

4. Schweißeinrichtung nach einem der vorhergehenden Ansprüche, dadurch **gekennzeichnet,** daß die Schlitze (Sch) zur Schweißkontur (a; b; c; d; e; f; g) hin geschlossen sind.

5. Schweißeinrichtung nach einem der Ansprüche 1 bis 3, dadurch **gekennzeichnet,** daß die Schlitze (Sch') zur Schweißkontur (a; b; o; d; e; f; g) hin offen sind.

6. Schweißeinrichtung nach einem der vorhergehenden Ansprüche, dadurch **gekennzeichnet,** daß die Schlitze (Sch; Sch') zumindest annähernd gleichmäßig über den Umfang der Hilfselektrode (H; H') verteilt sind.

7. Schweißeinrichtung nach einem der vorhergehenden Ansprüche, dadurch **gekennzeichnet,** daß die Hilfselektrode (H; H') aus einer Wolfram-Thorium- Legierung besteht.

8. Schweißeinrichtung nach Anspruch 7, **dadurch gekennzeichnet,** daß der Thorium-Anteil weniger als 5% beträgt.

## Claims

1. Welding device for producing flange-weld or edge-weld joints by fusion welding by magnetically driven arc, the arc being driveable between a welding contour, closed upon itself, of the workpiece and a non-consumable auxiliary electrode adapted to this welding contour, characterized in that slots (Sch; Sch') are made in the sheathing area of the auxiliary electrode (H; H'), which sheathing area is near to the welding contour (a; b; c; d; e; f; g) of the workpiece (W).

2. Welding device according to Claim 1, characterized in that the slots (Sch; Sch') are straight.

3. Welding device according to Claim 2, characterized in that the slots (Sch; Sch') are inclined relative to the longitudinal axis (La; La') of the auxiliary electrode (H; H').

4. Welding device according to any of the preceding claims, characterized in that the slots (Sch) are closed towards the welding contour (a; b; c; d; e; f; g).

5. Welding device according to any of Claims 1 to 3, characterized in that the slots (Sch') are open towards the welding contour (a; b; c; d; e; f; g).

6. Welding device according to any of the preceding claims, characterized in that the slots (Sch; Sch') are distributed at least approximately uniformly over the periphery of the auxiliary electrode (H; H').

7. Welding device according to any of the preceding claims, characterized in that the auxiliary electrode (H; H') is made of a tungsten-thorium alloy.

8. Welding device according to Claim 7, characterized in that the thorium proportion is less than 5%.

## Revendications

1. Dispositif de soudage pour réaliser des soudures sur bords relevés ou à cordon frontal plat par soudage par fusion au moyen d'un arc déplacé par voie magnétique, dans lequel l'arc est déplaçable entre un contour de soudage, fermé sur lui-même, de la pièce et une électrode auxiliaire non-fusible pas et qui est adaptée à ce contour de soudage, caractérisé en ce que des fentes (Sch; Sch') sont ménagées dans la partie de paroi latérale de l'électrode auxiliaire (H; H') qui est proche du contour de soudage (a; b; c; d; e; f; g) de la pièce (W).

2. Dispositif selon la revendication 1, caractérisé en ce que les fentes (Sch; Sch') sont droites.

3. Dispositif selon la revendication 2, caractérisé en ce que les fentes (Sch; Sch') sont inclinées par rapport à l'axe longitudinal (La; La') de l'électrode auxiliaire (H; H').

4. Dispositif selon une des revendications précédentes, caractérisé en ce que les fentes (Sch) sont fermées du côté du contour de soudage (a; b; c; d; e; f; g).

5. Dispositif selon une des revendications 1 à 3, caractérisé en ce que les fentes (Sch') sont ouvertes du côté du contour de soudage (a; b; c; d; e; f; g).

6. Dispositif selon une des revendications précédentes, caractérisé en ce que les fentes (Sch; Sch') sont réparties au moins à peu près uniformément sur la périphérie de l'électrode auxiliaire (H; H').

7. Dispositif selon une des revendications précédentes, caractérisé en ce que l'électrode auxiliaire (H; H') est faite d'un alliage tungstène-thorium.

8. Dispositif selon la revendication 7, caractérisé en ce que la fraction de thorium est inférieure à 5%.

FIG 1

FIG 2

FIG 3

FIG 4

FIG 5